(19) Europäisches Patentamt
European Patent Office
Office européen des brevets

(11) **EP 3 993 244 A1**

(12) **EUROPEAN PATENT APPLICATION**

(43) Date of publication:
**04.05.2022  Bulletin 2022/18**

(21) Application number: **20204805.4**

(22) Date of filing: **29.10.2020**

(51) International Patent Classification (IPC):
**H02M 1/14** (2006.01)    **H02M 3/158** (2006.01)

(52) Cooperative Patent Classification (CPC):
**H02M 1/14;** H02M 3/1586; H02M 7/219

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Valeo Siemens eAutomotive Norway AS**
**3036 Drammen (NO)**

(72) Inventors:
• **BOUCHEZ, Boris**
  **3057 SOLBERGELVA (NO)**
• **SØRSDAHL, Torbjørn**
  **3044 DRAMMEN (NO)**

(74) Representative: **Argyma**
  **14 Boulevard de Strasbourg**
  **31000 Toulouse (FR)**

(54) **AN INTERLEAVED POWER CONVERTER COMPRISING COUPLED INDUCTORS**

(57)    The invention concerns an interleaved power converter, notably configured to be on board an electric or a hybrid automotive vehicle, comprising: a first coupled inductor (30) and a second coupled inductor (40), the first coupled inductor (30) comprising a first inductive element (11), a second inductive element (21), and a first magnetic core (31), the second coupled inductor (40) comprising a third inductive element (12), a fourth inductive element (22), and a second magnetic core (41), said first inductive element (11) and said third inductive element (12) being connected in series; and said second inductive element (21) and said fourth inductive element (22) being connected in series, said first (11) and second (21) inductive elements being wounded in a same direction and said third (12) and fourth (22) inductive elements being wounded in opposite directions.

FIG. 3

EP 3 993 244 A1

**Description**

## FIELD OF THE INVENTION

The present invention concerns the field of electric systems controlling the supply of electric equipment with electric power, notably configured to be on board of an automotive vehicle such as an electric vehicle (EV) or a hybrid vehicle (HV). Such electric systems are designated as power converters.

The present invention relates in particular to the field of power converters, notably DC-DC power converters controlling the conversion of a direct current input voltage into a direct current output voltage, or AC-DC power converters controlling the conversion of an alternating current input voltage into a direct current output voltage.

## BACKGROUND OF THE INVENTION

As is known, an electric or hybrid automotive vehicle comprises systems or apparatus which respectively need to be supplied by a high voltage power supply, or in contrary, by a low voltage power supply. For example, an electric motorization system of the vehicle, configured to provide energy used to enable the propulsion of the vehicle, is supplied by a high voltage power supply battery via an on-board high voltage electrical network. The vehicle comprises further a plurality of auxiliary electrical equipment, such as on-board computers or window winder motors, being supplied by a low voltage power supply battery via an on-board low voltage electrical network. The high voltage power supply battery typically delivers a voltage between 100 V and 900 V, preferably between 100 V and 500 V, whereas the low voltage power supply battery typically delivers a voltage of the order of 12 V, 24 V or 48 V.

In a general manner, most electrical equipment of an electric or hybrid automotive vehicle, except the electric motor, needs a direct current (DC) source, i.e. a power supply providing a constant voltage. Consequently, such electrical equipment requires the use of power converters, especially DC-DC power converters, designed for supplying a DC current meeting the power specifications of the considered electrical equipment. As an example, an electric motorization system comprises an on-board electric charger, commonly designated OBC, designed for supplying the high voltage power supply battery with a direct current (DC) provided by an external electrical supply network, generally an alternating current (AC) network. According to a known solution, the OBC comprises a DC-DC power converter to enable galvanic insulation between the AC network and the DC network and an AC-DC power converter which is connected between the external supply network and the DC-DC power converter. As another example, the electric motorization system comprises a DC-DC power converter to ensure the charging of the low voltage power supply battery with electricity provided by the high voltage power supply battery.

A power converter comprises, in general, two switches connected to each other to form a chopper circuit, and an inductive element connected to a mid-point between the two switches. The assembly comprising the chopper circuit and the inductive element is designated as a switching cell. It may be useful to use several switching cells in parallel in order to provide the necessary power required by the electrical equipment instead of one switching cell. This namely allows using cheaper electrical components and reduces the ripples in the electrical signals. The several switching cells are connected in parallel such that their output currents or voltages are summed to provide the total wanted output current or voltage. In general, a number of two to four switching cells are used. Generally, all switching cells usually have the same switching frequency. The switching cells are controlled by a switching control method, so that each of the switching cells is used out-of-phase from the others. Each phase has an equal phase difference with the following phase. The described switching cells are then designated as interleaved cells, and the corresponding power converter is known as an interleaved power converter.

Nevertheless, the ripple current of an interleaved power converter remains highly sensitive to the difference in inductance between the interleaved cells, and hence to the inductance variability due to manufacturing tolerances. In addition, depending on the state of the switches of the interleaved cell, the resulting inductance over the interleaved cells could be equal to zero, which could be an impediment for the proper functioning of the interleaved power converter.

To overcome at least partially the above-mentioned drawbacks, the present invention proposes an interleaved power converter comprising coupled inductors.

## SUMMARY OF THE INVENTION

In accordance with the present invention an interleaved power converter, notably configured to be on board an electric or a hybrid automotive vehicle, is provided which can partially equilibrate the power between interleaved cells of the interleaved power converter. Thus, the present invention allows to decrease the needs of filtering and contributes to the increase of the interleaved power converter compacity.

The interleaved power converter according to the invention comprises a first coupled inductor and a second coupled inductor. The first coupled inductor comprises a first inductive element, a second inductive element, and a first magnetic core. The first and the second inductive elements are coupled together through the first magnetic core. The second coupled inductor comprises a third inductive element, a fourth inductive element, and a second magnetic core. The third and the fourth inductive elements are coupled together through the second magnetic core, which is distinct from the first magnetic core.

Furthermore, the first inductive element and the third inductive element are connected in series in a first circuit branch. Similarly, the second inductive element and the fourth inductive element are connected in series in a second circuit branch.

The first and the second inductive elements are wounded in a same direction and the third and the fourth inductive elements are wounded in opposite directions.

Advantageously, the first inductive element and the second inductive element have a first same number of winding turns, and the third inductive element and the fourth inductive element have a second same number of winding turns. This allows to limit a discrepancy between the expected values of the resultant inductance value of the first and the second circuit branches.

Advantageously, the first inductive element and the third inductive element implement the inductance of a first interleaved cell of the interleaved power converter. Likewise, the second inductive element and the fourth inductive element implement in an advantageous manner the inductance of a second interleaved cell of the interleaved power converter.

Advantageously, the first interleaved cell comprises a first half bridge configuration and the first circuit branch. In a similar manner, the second interleaved cell comprises advantageously a second half bridge configuration and the second circuit branch. Then, each half bridge configuration comprises in an advantageous manner an upper switch, and a lower switch. Furthermore, each of the first and of the second circuit branches preferably comprise a first and a second terminals. Then, the upper and the lower switches are both connected to the first terminal of their respective circuit branch.

Advantageously, the second terminals of respectively the first and the second circuit branches are connected together.

Advantageously, the interleaved power converter is configured to have four switching configurations such that the upper and the lower switches of respectively the first and the second half bridge configurations do not have a same state at a same time. This allows to ensure a proper functioning of the interleaved power converter.

Advantageously, each of the inductive elements comprises a first and a second terminals. Then, the first terminal of the first inductive element is preferably connected to the second terminal of the third inductive element, and the first terminal of the second inductive element is preferably connected to the second terminal of the fourth inductive element.

Advantageously, in the first coupled inductor, the first terminals of the first and of the second inductive elements are on the same side of the first magnetic core. Likewise, in the second coupled inductor, the first terminals of the third and of the fourth inductive elements are preferably on opposite sides of the second magnetic core. In this way, a proper functioning of the interleaved power converter can thus be ensured in all four switching configurations.

Advantageously, in each of the first and of the second circuit branches, the first and the second terminals of the corresponding circuit branch are formed by the terminals of the inductive elements of the corresponding circuit branch which are not connected together.

Advantageously, the first and the second magnetic cores have a toroidal form.

Advantageously, the interleaved power converter is a two-phase interleaved power converter.

Advantageously, the interleaved power converter is a DC-DC power converter.

Advantageously, the interleaved power converter is an AC-DC power converter.

## BRIEF DESCRIPTION OF THE DRAWINGS

The invention will be better understood on reading the description that follows, and by referring to the appended drawings given as non-limiting examples, in which identical references are given to similar objects and in which:

Figure 1 illustrates a schematic circuit diagram of a conventional interleaved power converter;

Figure 2 illustrates a schematic circuit diagram of an interleaved power converter according to an embodiment of the invention;

Figure 3 illustrates coupled inductors comprised in the interleaved power converter according to an embodiment of the invention;

Figure 4 illustrates a schematic diagram of a magnetic flux configuration in the coupled inductors comprised in the interleaved power converter according to an embodiment of the invention;

Figure 5 illustrates a schematic diagram of another magnetic flux configuration in the coupled inductors comprised in the interleaved power converter according to an embodiment of the invention;

Figure 6 illustrates a schematic circuit diagram of an interleaved power converter according to another embodiment of the invention.

## DETAILED DESCRIPTION

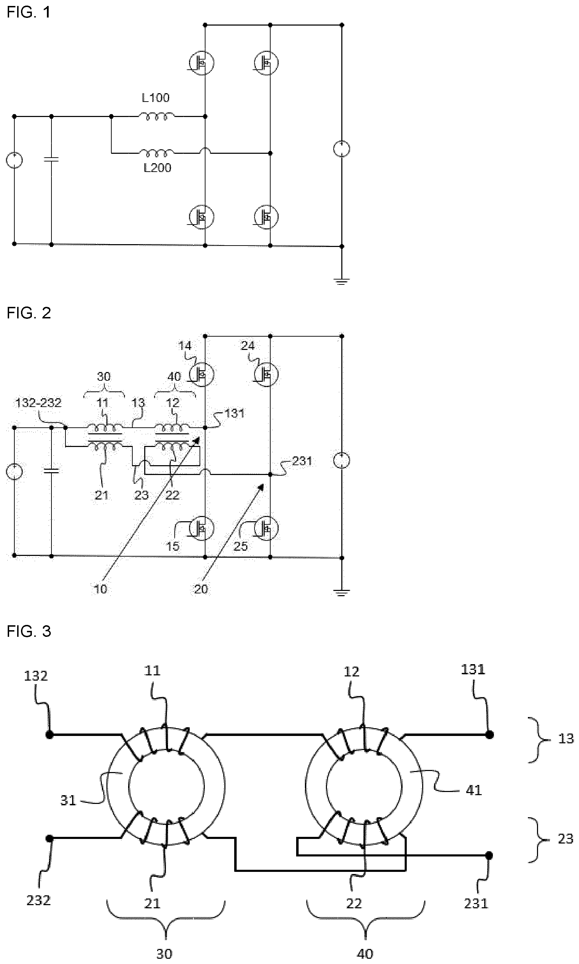

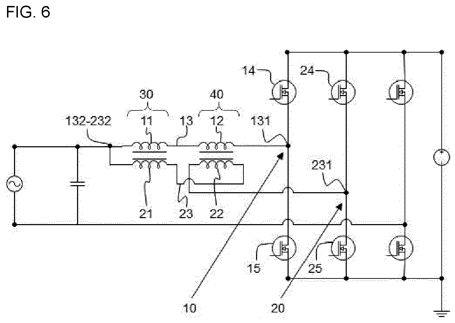

The invention concerns an interleaved power converter comprising two interleaved cells, notably configured to be on board an electric or a hybrid automotive vehicle without this limiting the scope of the present invention. The interleaved power converter according to the invention may notably be a DC-DC power converter as schematically represented in Figure 2, or an AC-DC power converter as schematically represented in Figure 6. The DC-DC power converters control the conversion of a direct current input voltage into a direct current output voltage, whereas the AC-DC power converters control the conversion of an alternating current input voltage into a direct current output voltage.

Hereafter are provided a general description of the invention and relevant notations and definitions.

Figure 2 and 6 illustrate a general schematic diagram of the interleaved power converter, according to an embodiment and another embodiment of the invention. The interleaved power converter comprises a first 30 and a second 40 coupled inductors. As illustrated in Figures 2 to 6, the first coupled inductor 30 comprises a first inductive element 11, a second inductive element 21, and a first magnetic core 31. The first 11 and the second 21 inductive elements are coupled together through the first magnetic core 31. Similarly, the second coupled inductor 40 comprises a third inductive element 12, a fourth inductive element 22, and a second magnetic core 41. The third 12 and the fourth 22 inductive elements are coupled together through the second magnetic core 41, which is distinct from the first magnetic core 31.

Moreover, the first 11 and the third 12 inductive elements are connected in series in a first circuit branch 13, notably directly in series. Notably, the first 11 and the third 12 inductive elements are formed from a first same winding successively wounded on the first 31 and on the second 41 magnetic cores. Likewise, the second 21 and the fourth 22 inductive elements are connected in series in a second circuit branch 23, notably directly in series. Notably, the second 21 and the fourth 22 inductive elements are formed from a second same winding successively wounded on the first 31 and on the second 41 magnetic cores.

The first 11 and the second 21 inductive elements are wounded in a same direction while the third 12 and the fourth 22 inductive elements are wounded in opposite directions. Such a connection arrangement complies with a proper functioning of the interleaved power converter.

The interleaved power converter comprises a first 10 and a second 20 interleaved cells but can comprise more than two interleaved cells. For instance, an embodiment of the AC-DC power converter illustrated in Figure 6 and an embodiment of the DC-DC power converter illustrated in Figure 2 comprise two interleaved cells comprising the coupled inductors according to the invention.

Advantageously, the first interleaved cell 10 comprises a first half bridge configuration and the first circuit branch 13. Similarly, in an advantageous manner, the second interleaved cell 20 comprises a second half bridge configuration and the second circuit branch 23. Each one of the first and of the second half bridge configurations comprises an upper switch 14,24, and a lower switch 15,25. Moreover, each one of the first 13 and of the second 23 circuit branches comprise in an advantageous manner a first 131,231 and a second 132,232 terminals. Then, the upper 14 and the lower 15 switches of the first circuit branch 13 are both connected to the first terminal 131 of the first circuit branch 13. The upper 24 and the lower 25 switches of the second circuit branch 23 are as well both connected to the first terminal 231 of the second circuit branch 23.

In particular, the switches 14, 15, 24, 25 have a same switching period Ts, and hence a same switching frequency "fs" which can be represented in a following equation:

$$fs = \frac{1}{Ts}.$$

As presented beforehand, each of the first 10 and the second 20 interleaved cells comprise two inductive elements respectively in the first 13 and in the second 23 circuit branches. The first interleaved cell 10 comprises the first 11 and the third 12 inductive elements. In other words, the first 11 and the third 12 inductive elements implement the inductance of the first interleaved cell 10. Furthermore, the second interleaved cell 20 comprises the second 21 and the fourth 22 inductive elements. In other words, the second 21 and the fourth 22 inductive elements implement the inductance of the second interleaved cell 20. Advantageously, said inductive elements 11, 21, 12, 22 have an inductance respectively designated as L11, L21, L12, and L22.

Advantageously, the second terminals 132,232 of respectively the first circuit branch 13 and of the second circuit branch 23, are connected together.

According to an embodiment, the first 11 and the second 21 inductive elements are connected to the second terminals 132,232 of respectively the first 13 and the second 23 circuit branches. Then, the third 12 and the fourth 22 inductive elements are connected to the first terminals 131,231 of respectively the first 13 and the second 23 circuit branches.

In a general manner, an interleaved power converter advantageously allows to reduce the ripple current amplitude and to increase the ripple current frequency. In the interleaved configuration, the ripple current frequency corresponds to the number of interleaved cells times the switching frequency. In a particular case of an interleaved power converter comprising two interleaved cells, the ripple current fundamental frequency should in theory be equal to the double of the switching frequency. In reality, an unbalanced distribution of inductances over all interleaved cells would cause a fundamental frequency to be equal to the switching frequency, which is undesirable and requires higher filtering requirements. Hence, it inevitably results in an increase of the weight, the volume and/or the cost of the interleaved power converter.

The configuration of two coupled inductors 30 and 40, each comprising two coupled inductive elements having a common magnetic core (31 or 41) allows to share the dispersion of the inductance value between the first 10 and the second 20 interleaved cells even in presence of inductance discrepancy between the first 31 and the second 41 magnetic cores, which prevents thus from generating a ripple current frequency peak at the switching frequency "fs". Generally, the dispersion in the inductance value of an inductive element is due to a variability in the chemical composition of the magnetic core. By coupling via a same magnetic core, each inductive element of an interleaved cell with a respective other inductive element of the other interleaved cell, the interleaved cells work with the same magnetic cores. Therefore, a discrepancy between the expected values of the resultant inductance value of the first 30 and the second 40 coupled inductors is limited. Preferably, the first 11 and the second 21 inductive elements have a first same number of winding turns; the third 12 and the fourth 22 inductive elements have a second same number of winding turns. This allows having the same inductance value in each interleaved cell, and, at least partially, equilibrating the power between the interleaved cells.

One example of calculating inductances L10 and L20 of respectively the first 10 and the second 20 interleaved cells will be described below, given that an inductance of the first coupled inductor 30 and that of the second coupled inductor 40 are respectively represented by "L30" and "L40" in following equations. The inductance L10 of the first interleaved cell 10 can be obtained by performing a following equation:

$$L10 = \frac{n11}{n30} * L30 + \frac{n12}{n40} * L40.$$

The inductance L20 of the second interleaved cell 20 can be obtained by performing a following equation:

$$L20 = \frac{n21}{n30} * L30 + \frac{n22}{n40} * L40.$$ In the above-mentioned two equations performed to obtain the inductances L10 and L20, n30=n11+n21, and n40=n12+n22, wherein n30, n40, n11, n21, n12, n22 being respectively a number of winding turns of the coupled inductors 30, 40 and of the inductive elements 11, 21, 12, 22.

As mentioned previously, it may be desirable to have the inductances L10 and L20 be equal to a desired inductance "L" in each of the interleaved cells 10 and 20, with a constraint of having the inductance L30 of the first coupled inductor 30 potentially different from the inductance L40 of the second coupled inductor 40. Therefore, it is required to make n11 be equal to n21 and to make n12 be equal to n22, which results in L10 being equal to L20.

As an illustrative but not limiting example, Figure 1 represents a schematic diagram of a conventional interleaved power converter as is known comprising two interleaved cells with one inductance per interleaved cell, which values are respectively L100 and L200. When the inductance value L100 is slightly different from L200, slightly meaning in this case that the inductance of L100 differs from L200 by the inductance tolerance of a real inductive element, the current spectrum has a frequency peak at the switching frequency.

The interleaved power converter according to an embodiment of the invention, comprising an electrical circuit schematically represented in Figure 2 or Figure 6, provides a current spectrum without a spectrum peak at the switching frequency. The invention allows consequently to remove a spectrum peak at the switching frequency, allowing to substantially reduce inductive and filtering requirements compared to the conventional interleaved power converter.

The interleaved cells are described hereafter.

Each of the first 10 and the second 20 interleaved cells comprises two switches as described beforehand, preferably two MOS switches, or alternatively one MOS switch and one diode.

In order that the interleaved power converter can function properly, the switches 14, 15 and 24, 25 of respectively the first and the second half bridge configurations should not have a same state at a same time. For the interleaved power converter, there are preferably four following switching configurations: a first switching configuration in which the first upper switch 14 is on, the first lower switch 15 is off, the second upper switch 24 is on, the second lower switch 25 is off; a second switching configuration in which the first upper switch 14 is on, the first lower switch 15 is off, the second upper switch 24 is off, the second lower switch 25 is on; a third switching configuration in which the first upper switch 14 is off, the first lower switch 15 is on, the second upper switch 24 is on, the second lower switch 25 is off; and a fourth switching configuration in which the first upper switch 14 is off, the first lower switch 15 is on, the second upper switch 24 is off, the second lower switch 25 is on.

The coupled inductors will now be described.

Figures 2 to 6 illustrate the first 30 and the second 40 coupled inductors. The first 30 and the second 40 coupled inductors are configured to ensure a proper functioning of the interleaved power converter.

In an advantageous manner in reference to Figures 2 to 6, each of the inductive elements 11, 21, 12, 22 comprise a first and a second terminals. The first terminal of the first inductive element 11 is connected to the second terminal of the third inductive element 12. Furthermore, the first terminal of the second inductive element 21 is connected to the second terminal of the fourth inductive element 22.

According to an embodiment of the invention, as represented in Figures 2 to 6, in the first coupled inductor 30, the first terminals of the first 11 and of the second 21 inductive elements may be on a same side of the first magnetic core 31. Then, in the second coupled inductor 40, the first terminals of the third 12 and of the fourth 22 inductive elements are on opposite sides of the second magnetic core 41. In this way, a proper functioning of the interleaved power converter can thus be ensured in all said four switching configurations.

Alternatively, according to another embodiment of the invention, in the first coupled inductor 30, the first terminals of the first 11 and of the second 21 inductive elements may be on opposite sides of the first magnetic core 31. Then, in the second coupled inductor 40, the first terminals of the third 12 and of the fourth 22 inductive elements are on a same side of the second magnetic core 41. In this way, a proper functioning of the interleaved power converter can thus be ensured in all said four switching configurations.

Such a connection strategy with a reversed connection of the coupled inductors 30-40 in one of the interleaved cells 10 or 20 as illustrated in Figures 2 to 6, allows that, in any allowable configuration of the four switches 14, 15, 24, and 25 of the interleaved power converter, a resultant inductance of the interleaved power converter is not equal to zero, which avoids the generation of a current variation that tends to infinity.

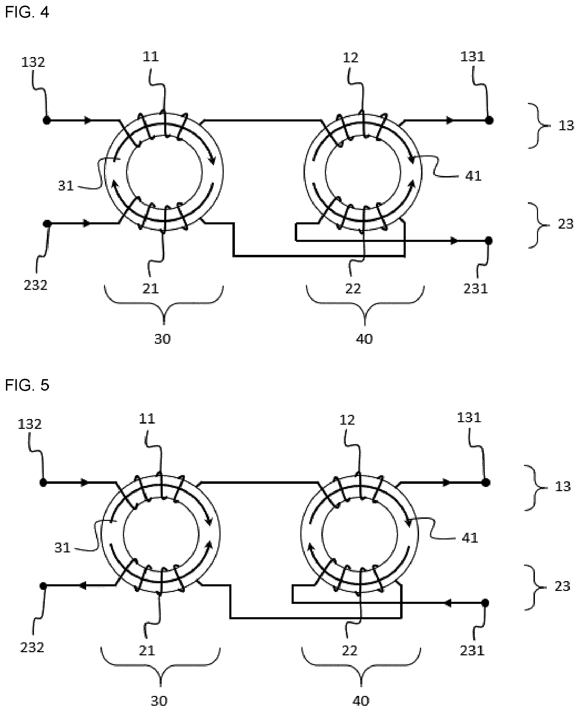

In reference to Figures 2 and 4, according to the first and the fourth switching configurations, in the first magnetic core 31, a magnetic flux from the first inductive element 11 and another magnetic flux from the second inductive element 21, both flow in a same direction. Moreover, in the second magnetic core 41, a magnetic flux from the third inductive element 12 and another magnetic flux from the fourth inductive element 22, flow in two opposite directions. In this way a magnetic flux cancellation is provoked in the second magnetic core 41. Thus, in the first and fourth switching configurations with the first 30 and the second 40 coupled inductors being in presence respectively of common mode currents and of differential mode currents, a resultant inductance of the first 30 and of the second 40 coupled inductors is equivalent to a contribution of the first coupled inductor 30.

Similarly, in reference to Figures 2 and 5, in the second and the third switching configurations, in the first magnetic core 31, a magnetic flux from the first inductive element 11 and another magnetic flux from the second inductive element 21, both flow in two opposite directions. Moreover, in the second magnetic core 41, a magnetic flux from the third inductive element 12 and another magnetic flux from the fourth inductive element 22, flow in a same direction. In this way, a magnetic flux cancellation is provoked in the first magnetic core 31. Thus, in the second and third switching configurations with the first 30 and the second 40 coupled inductors being in presence of respectively of differential mode currents and of common mode currents, a resultant inductance of the first 30 and of the second 40 coupled inductors is equivalent to a contribution of the second coupled inductor 40.

In consequence, a connection arrangement of the two coupled inductors 30-40 as previously described and as illustrated in Figure 3 ensures a proper functioning of the interleaved power converter according to the invention.

In an advantageous manner, it can be noted that in each of the first 13 and of the second 23 circuit branches, the first 131,231 and the second 132,232 terminals of the corresponding circuit branch are formed by the terminals of the inductive elements 11,21,12,22 of the corresponding circuit branch which are not connected together.

Advantageously, each of the first 31 and the second 41 magnetic cores have a toroidal form, the toroidal configuration providing a reduced electromagnetic radiation, size and/or weight. Nonetheless, there are no particular limitations regarding a magnetic core configuration.

Advantageously, each of the inductive elements 11, 21, 12, and 22 comprises a coil.

Although embodiments have been described with reference to a number of illustrative embodiments thereof, it should be understood that numerous other modifications and embodiments can be devised by those skilled in the art that will fall within the spirit and scope of the principles of this disclosure.

The present invention thus provides the interleaved power converter producing a ripple current without a spectrum peak at the switching frequency, especially compared to the conventional interleaved power converter. The interleaved power converter according to an embodiment of the invention generates a value of ripple current fundamental frequency being twice the value of the switching frequency, despite the variability of the inductances of the inductive cores used, which is due to manufacturing tolerance. This is an improvement provided by the invention, as it decreases the needs of filtering and contributes thus to the increase of the interleaved power converter compacity while remaining at the same switching frequency. From another point of view, for the same ripple current outcome, the switching time period can be increased without the need of increasing the filtering system requirements.

Advantageously, using the two coupled inductors each having an inductance LI, instead of using one single inductor with a total inductance 2*LI, allows to use cheaper inductive components and to benefit from a potential electromagnetic coupling.

Advantageously, using a configuration with coupled inductors instead of a configuration using independent inductors, allows to benefit from a mutual inductive phenomenon, and thus allows to decrease as well the value of the inductance required for each inductor.

Advantageously, the interleaved power converter according to the invention can have several configurations, for example a buck power converter, a boost power converter or a buck-boost power converter.

Advantageously, the interleaved power converter according to the invention may be a two-phase interleaved power converter, a DC-DC power converter (Figure 2), or an AC-DC power converter (Figure 6).

**Claims**

1. An interleaved power converter, notably configured to be on board an electric or a hybrid automotive vehicle, comprising:

a first coupled inductor (30) and a second coupled inductor (40),
**characterized in that**:

said first coupled inductor (30) comprises a first inductive element (11), a second inductive element (21), and a first magnetic core (31), said first (11) and said second (21) inductive elements being coupled together through said first magnetic core (31),
said second coupled inductor (40) comprises a third inductive element (12), a fourth inductive element (22), and a second magnetic core (41), said third (12) and said fourth (22) inductive elements being coupled together through said second magnetic core (41), which is distinct from the first magnetic core (31),
said first inductive element (11) and said third inductive element (12) being connected in series in a first circuit branch (13),
said second inductive element (21) and said fourth inductive element (22) being connected in series in a second circuit branch (23),
said first (11) and said second (21) inductive elements being wounded in a same direction and said third (12) and said fourth (22) inductive elements being wounded in opposite directions.

2. The interleaved power converter as claimed in claim 1, the first inductive element (11) and the second inductive element (21) having a first same number of winding turns, and the third inductive element (12) and the fourth inductive element (22) having a second same number of winding turns.

3. The interleaved power converter as claimed in claims 1 or 2, wherein the first inductive element (11) and the third inductive element (12) implement the inductance of a first interleaved cell (10) of the interleaved power converter, and the second inductive element (21) and the fourth inductive element (22) implement the inductance of a second interleaved cell (20) of the interleaved power converter.

4. The interleaved power converter as recited in claim 3, wherein the first interleaved cell (10) comprises a first half bridge configuration and the first circuit branch (13), and the second interleaved cell (20) comprises a second half bridge configuration and the second circuit branch (23), each half bridge configuration comprising an upper switch (14, 24), and a lower switch (15, 25), and each of the first (13) and of the second (23) circuit branches comprise a first (131, 231) and a second (132, 232) terminals, said upper (14,24) and said lower (15,25) switches being both connected to said first terminal (131,231) of their respective circuit branch (13,23).

5. The interleaved power converter as claimed in claim 4, wherein the second terminals (132, 232) of respectively the first (13) and the second (23) circuit branches are connected together.

6. The interleaved power converter as claimed in any of the previous claims 4 or 5, configured to have four switching configurations such that the upper (14,24) and the lower (15,25) switches of respectively the first and the second half bridge configurations do not have a same state at a same time.

7. The interleaved power converter as claimed in any of the previous claims, wherein each of the inductive elements (11,21,12,22) comprises a first and a second terminals, the first terminal of the first inductive element (11) being connected to the second terminal of the third inductive element (12); and the first terminal of the second inductive element (21) being connected to the second terminal of the fourth inductive element (22).

8. The interleaved power converter as claimed in the previous claim, wherein in the first coupled inductor (30), the first terminals of the first (11) and of the second (21) inductive elements are on the same side of the first magnetic core (31); and in the second coupled inductor (40), the first terminals of the third (12) and of the fourth (22) inductive elements are on opposite sides of the second magnetic core (41).

9. The interleaved power converter as claimed in claims 4 and 7, wherein, in each of the first (13) and of the second (23) circuit branches, the first (131,231) and the second (132,232) terminals of the corresponding circuit branch are formed by the terminals of the inductive elements (11,21,12,22) of the corresponding circuit branch which are not connected together.

10. The interleaved power converter as claimed in any of the previous claims, wherein said first (31) and said second (41) magnetic cores have a toroidal form.

11. The interleaved power converter as claimed in any of the preceding claims, being a two-phase interleaved power converter.

12. The interleaved power converter as claimed in any of the preceding claims, being a DC-DC power converter.

13. The interleaved power converter as claimed in any of the preceding claims, being an AC-DC power converter.

FIG. 1

FIG. 2

FIG. 3

FIG. 4

FIG. 5

FIG. 6

Europäisches
Patentamt

European
Patent Office

Office européen
des brevets

## EUROPEAN SEARCH REPORT

Application Number

EP 20 20 4805

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/063010 A1 (ABB SCHWEIZ AG [CH]; TIAN KAI [CN] ET AL.) 2 April 2020 (2020-04-02) * figure 1A * * figure 7A * * figure 8A * * paragraph [0029] - paragraph [0034] * * paragraph [0066] - paragraph [0077] * ----- | 1-13 | INV. H02M1/14 H02M3/158 |
| X | DOU YI ET AL: "Design the High-frequency DC-DC Converter with Integrated Coupled Inductor and Current-Balancing-Transformer", 2020 IEEE APPLIED POWER ELECTRONICS CONFERENCE AND EXPOSITION (APEC), IEEE, 15 March 2020 (2020-03-15), pages 2610-2616, XP033784820, DOI: 10.1109/APEC39645.2020.9124329 [retrieved on 2020-06-23] * figure 5 * * page 2612 * ----- | 1-13 | |
| X | SCHRITTWIESER LUKAS ET AL: "99.3% Efficient Three-Phase Buck-Type All-SiC SWISS Rectifier for DC Distribution Systems", IEEE TRANSACTIONS ON POWER ELECTRONICS, INSTITUTE OF ELECTRICAL AND ELECTRONICS ENGINEERS, USA, vol. 34, no. 1, 1 January 2019 (2019-01-01), pages 126-140, XP011697115, ISSN: 0885-8993, DOI: 10.1109/TPEL.2018.2817074 [retrieved on 2018-11-27] * figure 4a * ----- | 1-13 | TECHNICAL FIELDS SEARCHED (IPC) H02M |

The present search report has been drawn up for all claims

| Place of search | Date of completion of the search | Examiner |
|---|---|---|
| The Hague | 26 March 2021 | Riehl, Philippe |

EPO FORM 1503 03.82 (P04C01)

## ANNEX TO THE EUROPEAN SEARCH REPORT
## ON EUROPEAN PATENT APPLICATION NO.

EP 20 20 4805

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2021

| Patent document cited in search report | | Publication date | Patent family member(s) | | Publication date |
|---|---|---|---|---|---|
| WO 2020063010 | A1 | 02-04-2020 | WO<br>WO | 2020061905 A1<br>2020063010 A1 | 02-04-2020<br>02-04-2020 |

For more details about this annex : see Official Journal of the European Patent Office, No. 12/82

EPO FORM P0459